(19) Europäisches Patentamt / European Patent Office / Office européen des brevets

(11) **EP 1 969 792 B1**

(12) **FASCICULE DE BREVET EUROPEEN**

(45) Date de publication et mention de la délivrance du brevet:
**30.11.2016 Bulletin 2016/48**

(21) Numéro de dépôt: **06842113.0**

(22) Date de dépôt: **07.12.2006**

(51) Int Cl.:
*H04L 27/26* *(2006.01)*      *H04L 1/00* *(2006.01)*

(86) Numéro de dépôt international:
**PCT/FR2006/051302**

(87) Numéro de publication internationale:
**WO 2007/066044 (14.06.2007 Gazette 2007/24)**

(54) **PROCEDE ET DISPOSITIF D'ENTRELACEMENT DYNAMIQUE**

VERFAHREN UND VORRICHTUNG ZUR DYNAMISCHEN VERWÜRFELUNG

DYNAMIC INTERLEAVING METHOD AND DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.12.2005 FR 0553763**

(43) Date de publication de la demande:
**17.09.2008 Bulletin 2008/38**

(73) Titulaire: **Orange**
**75015 Paris (FR)**

(72) Inventeurs:
• **SIAUD, Isabelle**
**F-35000 Rennes (FR)**
• **ULMER-MOLL, Anne-Marie**
**F-35000 Rennes (FR)**

(74) Mandataire: **Jeune, Pascale**
**Orange**
**IMTW/OLPS/IPL/PAT**
**Orange Gardens**
**44 Avenue de la République**
**CS 50010**
**92326 Châtillon Cedex (FR)**

(56) Documents cités:
**EP-A- 1 170 917      FR-A- 2 854 020**
**US-B1- 6 704 366**

• ANUJ BATRA ET AL: "TI Physical Layer Proposal for IEEE 802.15 Task Group 3a" IEEE P802.15 WIRELESS PERSONAL AREA NETWORKS, 12 mai 2003 (2003-05-12), XP002377175

EP 1 969 792 B1

**Description**

La présente invention se rapporte au domaine des télécommunications. Au sein de ce domaine, l'invention se rapporte plus particulièrement aux communications dites numériques. Les communications numériques comprennent en particulier les communications sans fil ; elles comprennent aussi par exemple les communications filaires. Le support de transmission des communications est couramment appelé canal de transmission ou de propagation, à l'origine en référence à un canal aérien et par extension en référence à tout canal.

L'invention concerne les techniques d'entrelacement. Ces techniques sont généralement mises en oeuvre pour réduire la corrélation introduite par une opération de filtrage 'sélectif inhérente au canal de transmission.

L'invention s'applique en particulier à tout type de système de transmission à porteuses multiples, pour lequel l'information mise sous la forme de symboles de données (cellules QAM, QPSK, ...) est multiplexée sur un réseau de sous-porteuses correspondant à une subdivision fréquentielle de la bande instantanée du système de transmission, soumis à une perturbation fréquentielle traduisant l'effet d'un canal de transmission dont la fonction de transfert H(f,t) est fortement colorée et peu variable dans le temps, ou bien à un système affecté d'une forte dispersion Doppler qui génère une perte d'orthogonalité des sous-porteuses d'un module de multiplexage et de modulation par des fonctions orthogonales. Un tel module est désigné par les termes multiplex OFDM (en anglais « Orthogonal Frequency Division Multiplexing ») dans le cas d'un dispositif mettant en oeuvre un multiplexage de symboles modulés par des sous-porteuses correspondant aux composantes de Fourier conjuguées d'une transformation de Fourier dont la taille $N_{FFT}$ correspond au nombre de sous-porteuses du multiplex OFDM. A l'émission, le signal OFDM utile dans sa représentation temporelle est formé par $N_{FFT}$ échantillons et résulte pour chaque échantillon de la sommation des symboles complexes modulés par les composantes de Fourier conjuguées. En réception, la projection du signal OFDM sur les composantes de Fourier correspondantes et l'intégration sur l'ensemble des échantillons du signal OFDM fournit une estimation d'un des symboles du multiplex OFDM. Par analogie, un module de multiplexage et de modulation par des fonctions orthogonales des symboles transmis est indifféremment désigné par le terme multiplex orthogonal dans la suite du document. Lorsque le nombre de symboles de données par multiplex orthogonal est inférieur au nombre de fonctions orthogonales, un symbole nul est placé au centre et des symboles nuls sont placés aux extrémités du multiplex orthogonal de façon symétrique. Le canal de transmission désigné aussi par canal multitrajet est représenté par la réponse impulsionnelle $h(t,\tau)$ d'un filtre numérique où t représente la variable temps et $\tau$ la variable des retards associée aux coefficients du filtre à l'instant t. Le canal de transmission filtre le signal multiporteuse en pondérant chaque symbole par la fonction de transfert du canal décomposée sur le multiplex OFDM. Il génère en réception une corrélation des sous porteuses dans les domaines fréquentiel et temporel. La corrélation fréquentielle affecte les sous-porteuses et la corrélation temporelle induit des sous porteuses d'amplitude quasi constante sur une fenêtre d'observation de l'ordre du temps de cohérence du canal. Le temps de cohérence correspond à la valeur moyenne de l'écart temporel nécessaire pour assurer une décorrélation du signal représentatif du support de transmission avec sa version décalée temporellement.

Cette double corrélation limite les performances des circuits de décision en réception.

La corrélation temporelle induit des paquets d'erreurs après décision des symboles de données transmis et après décodage des bits transmis estimés. Ces effets se rencontrent lorsque l'environnement varie lentement et est multitrajet. C'est en particulier le cas pour les systèmes ultra large bande (Ultra Wide Band), pour les systèmes radio dédiés à la boucle locale radio (Wi-max et DECT ("Digital Enhanced Cordless Telecommunications")), ou pour les transmissions de type xDSL.

La corrélation fréquentielle résulte à la fois de l'effet multitrajet qui introduit un filtrage, de l'effet Doppler et du bruit de phase des étages RF qui induisent une perte d'orthogonalité des sous-porteuses d'un multiplex orthogonal. C'est en particulier le cas des systèmes à courte portée définis en bande millimétrique tels qu'étudiés dans l'organisme de normalisation américain IEEE802.15.3c ainsi que des systèmes à forte mobilité ou des systèmes très longue distance dédiés aux liaisons radio ionosphériques (système DRM ("Digitale Radio Mondiale") norme ETSI TS 101 980).

Une méthode pour remédier à cette double corrélation consiste à mettre en oeuvre à l'émission un entrelacement effectué sur les données binaires ou sur les symboles de données.

Les techniques d'entrelacement dans un système de transmission sont donc appliquées sur les données pour décorréler les données reçues et améliorer les circuits de décision.

Au niveau binaire lorsque le système est assorti d'un dispositif de redondance, les techniques d'entrelacement appliquées après l'opération de redondance permettent de réduire la taille des paquets d'erreurs. L'entrelacement est dit binaire quand il porte sur des bits codés ou bien sur des bits directement extraits de la source, bits désignés par le terme anglosaxon scrambling.

L'entrelacement est dit fréquentiel quand il porte sur les symboles complexes (QPSK, x-QAM, ...) affectés aux sous-porteuses d'un multiplex orthogonal et sa taille est égale au nombre de symboles de données par multiplex orthogonal. L'entrelacement est toujours réalisé sur les données utiles du dispositif de transmission avec une loi d'entrelacement statique pour chaque mode de transmission défini par le nombre d'états de la modulation, le codage etc... On désigne par données utiles les données transmises portant un message d'information et dépourvues de données dédiées à la signalisation et l'identification. Dans la suite du document, les données désignent les données utiles.

L'invention concerne plus particulièrement les entrelacements fréquentiels, c'est-à-dire les entrelacements effectués dans le domaine fréquentiel sur les symboles affectés aux porteuses d'un multiplex orthogonal. Ce type d'entrelacement intervient en entrée d'un multiplex orthogonal. De manière équivalente, on parle couramment d'entrelacement de porteuses ou de sous-porteuses.

Le document ETSI 300 401, "Radio broadcasting systems; Digital Audio Broadcasting (DAB) to mobile, portable and fixed receivers", May 1997, p182 donne une description de l'entrelacement fréquentiel du système multi porteuse DAB. Il s'agit d'un entrelacement de type fréquentiel effectué à l'échelle d'un multiplex OFDM car la loi de permutation P(i) tient compte de la taille $N_{FFT}$ de la FFT du multiplex OFDM. Il est appliqué sur les symboles de données du système correspondant à des symboles QPSK. Le brevet US-B1-6 704 366 décrit un entrelacement de bits de même type que celui du DAB mais adapté au nombre de porteuse sélectionnées. Le brevet US-B1-6 704 366 décrit un entrelacement de bits de même type que celui du DAB mais adapté au nombre de porteuse sélectionnées.

Selon le DAB, pour un mode de transmission donné, la loi d'entrelacement transforme un symbole QPSK $q_{1,n}$ en un nouveau symbole $y_{l,k}$ où k est l'indice de la porteuse après entrelacement, n, l'indice de la porteuse avant entrelacement et 1 le numéro du symbole OFDM dans la trame DAB transmis à l'instant $(1-1)T_{SYM}$, $T_{SYM}$ désigne la durée totale du symbole OFDM assorti d'un intervalle de garde. La loi d'entrelacement des symboles affectés aux porteuses du multiplex OFDM désignée par loi d'entrelacement des sous-porteuses est une loi de la forme k=F(n) où k est l'indice de la porteuse de données dans le multiplex OFDM. L'indice k varie entre {-Npm/2, Npm/2}\{0} et l'indice n varie entre [0, Npm-1]. Npm correspond au nombre de sous-porteuses de données par multiplex OFDM. La loi d'entrelacement est extraite d'un alphabet A qui tient compte de la taille $N_{FFT}$ du multiplex OFDM. En effet une loi d'entrelacement P(i) est d'abord définie pour i={0, $N_{FFT}$-1} prenant les valeurs A={P(0), P(1), .... P($N_{FFT}$-1)} dans l'espace des entiers I={0, $N_{FFT}$-1} suivant une loi P(i) de la forme :

$P(0) = 0$

$$P(i) = \left[ 13 \cdot P(i-1) + (\frac{N_{FFT}}{4} - 1) \right]_{N_{FFT}} , i = \{0,..N_{FFT} - 1\} \tag{1}$$

L'opération $[X]_{N_{FFT}}$ correspond à l'opération modulo $N_{FFT}$ qui fournit le reste de la division de X par $N_{FFT}$. Les valeurs P(i) strictement inférieures à Q=($N_{FFT}$-Npm)/2 et strictement supérieures à Npm+Q sont éliminées ainsi que la valeur $N_{FFT}$/2 correspondant à la porteuse centrale.

Ces données sont alors réparties suivant l'ordre i croissant dans un vecteur D={d0, d1, ... d$_{Npm-1}$} prenant ses valeurs dans l'intervalle I'={0,...., Npm-1}.

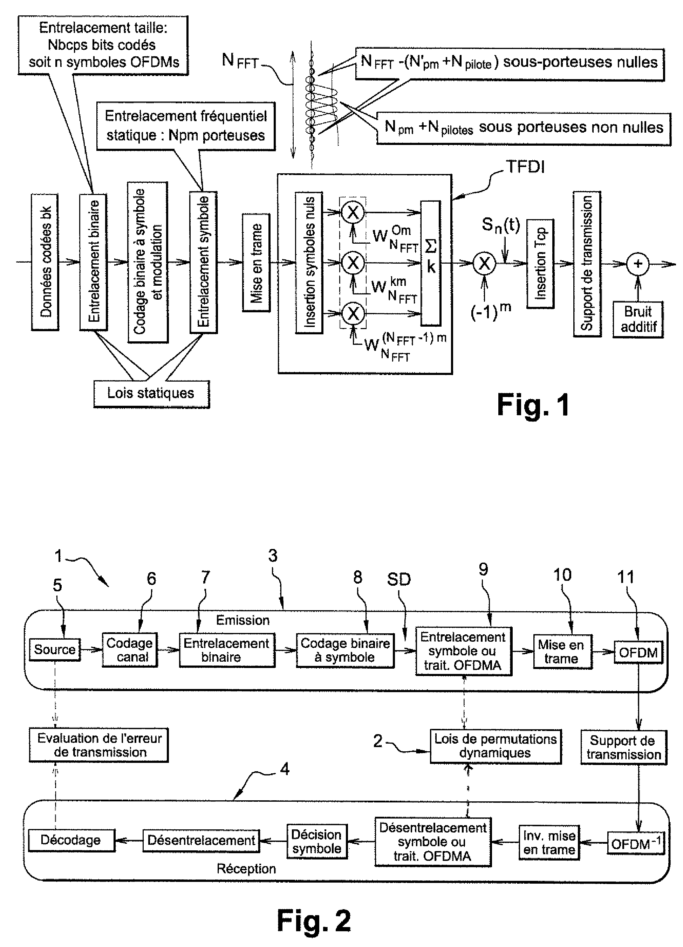

La correspondance F(n) =dn-$N_{FFT}$/2 est effectuée pour répartir les sous-porteuses entre les indices {-Npm/2 et Npm/2} en excluant l'indice 0 de la porteuse centrale. Le processus d'entrelacement des sous-porteuses correspond au schéma de la figure 1. Ce dernier donne le principe général d'entrelacement des sous-porteuses dans les systèmes classiques de type OFDM.

Les symboles de données entrelacés sont alors mis en trame puis répartis sur le multiplex OFDM avant émission. Le canal de transmission filtre le signal émis ce qui induit une corrélation des symboles de données. En réception, l'opération de désentrelacement des symboles de données en amont des circuits de décision permet alors de disposer de données avec une corrélation réduite à l'entrée du circuit de décision. Toutefois, pour les systèmes correspondants, la période d'entrelacement est en général petite devant le temps de cohérence du canal et des paquets d'erreur persistent en sortie du circuit de décision.

Aussi, le problème technique à résoudre par l'objet de la présente invention est de proposer un procédé d'entrelacement fréquentiel plus efficace que les procédés connus pour un dispositif d'émission comprenant un module de multiplexage et de modulation par des fonctions orthogonales dit multiplex orthogonal, en particulier un multiplex OFDM.

A cette fin, la présente invention a pour objet un procédé d'entrelacement de symboles, comme revendiqué à la revendication indépendante 1.

En outre, l'invention a pour objet un entrelaceur fréquentiel de symboles, comme revendiqué à la revendication indépendante 8.

L'invention a en outre pour objet un dispositif d'émission comme revendiqué à la revendication 11, ainsi qu'un dispositif de réception comme revendiqué à la revendication indépendante 12.

Ainsi, un procédé selon l'invention, qui concerne un procédé d'entrelacement fréquentiel consistant à utiliser une loi d'entrelacement différente au cours du temps, pour un mode de transmission donné, permet de générer une variabilité temporelle fictive du canal de transmission qui lui confère des propriétés statistiques tendant vers un bruit gaussien. Ceci permet de réduire la corrélation temporelle qui affecte un système de transmission dans lequel les symboles de données sont multiplexés puis modulés, en particulier un système OFDM, et

par conséquent d'améliorer la prise de décision en réception ; l'efficacité du système est ainsi améliorée. Contrairement aux procédés connus pour lesquels la loi d'entrelacement est statique pour un mode de transmission donné, la loi d'entrelacement est dynamique.

Selon un mode de réalisation particulier, la variation temporelle de la loi d'entrelacement dépend d'un indice temporel des symboles du multiplex orthogonal. Ces symboles possèdent un indice associé à la position des porteuses dans le multiplex orthogonal et un indice associé à l'instant d'émission d'un signal orthogonal dans un motif temporel. Ce signal est dans la suite du document désigné par le terme symbole orthogonal modulé. En particulier, la loi d'entrelacement peut varier après modulation d'un bloc de N symboles orthogonaux modulés, typiquement N symboles OFDM, N étant un paramètre déterminé typiquement en fonction des propriétés du canal de transmission et du tramage des données, $N \geq 1$. Selon un autre mode de réalisation particulier, l'entrelacement porte sur un bloc de M symboles et la variation temporelle de la loi d'entrelacement intervient après entrelacement du bloc de M symboles. Plus particulièrement, M est un multiple du nombre de porteuses de données Npm du multiplex orthogonal, Npm $\leq N_{FFT}$, et un sous-multiple de N. Selon un mode de réalisation particulier, la variation temporelle de la loi d'entrelacement intervient après entrelacement de N' blocs de M symboles.

Un procédé d'entrelacement selon l'invention peut, en outre, de manière particulièrement avantageuse, permettre d'accentuer la modification conjointe de la bande de cohérence, qui se rapporte au domaine fréquentiel du multiplex orthogonal, la bande de cohérence du canal correspondant à la valeur moyenne de l'écart fréquentiel nécessaire pour assurer une décorrélation de deux composantes fréquentielles de la fonction de transfert du canal de transmission, et de la longueur de cohérence, qui se rapporte au domaine temporel ou spatial, du canal de transmission ainsi que de réduire l'impact des étages RF. A cette fin en particulier, le procédé effectue un entrelacement bloc dynamique d'un bloc composé des symboles de données destinés à un multiplex orthogonal et de symboles nuls préalablement insérés aux extrémités du bloc. Ceci a notamment pour effet d'introduire des symboles nuls dans la bande passante du multiplex orthogonal, multiplex orthogonal typiquement OFDM, à des positions variables dans le temps du fait de l'entrelacement dynamique.

L'entrelacement dynamique, par exemple variable dans le temps tous les N symboles orthogonaux modulés, est effectué sur un bloc de N'pm symboles constitué par des symboles de données non nuls et des symboles nuls, ce bloc correspondant au niveau du multiplex orthogonal à N'pm sous-porteuses d'un symbole orthogonal modulé, symbole typiquement OFDM. N'pm est compris entre Npm, nombre de porteuses de données et $N_{FFT}$, taille du multiplex orthogonal. Typiquement, la loi d'entrelacement est statique pour N symboles orthogonaux modulés, symboles typiquement OFDM, et est appliquée sur un bloc de N'pm symboles. Ces symboles sont affectés à des porteuses d'un groupe formé par les porteuses de données d'un symbole orthogonal modulé, typiquement OFDM, et par une portion de porteuses nulles localisées aux extrémités du spectre du symbole orthogonal modulé, typiquement OFDM.

Ainsi, l'entrelacement permet d'insérer des porteuses nulles dans la bande utile du multiplex orthogonal, en particulier d'un multiplex OFDM. Cette insertion de porteuses nulles renforce l'effet de modification des propriétés du canal de transmission obtenu par l'entrelacement dynamique, en translatant, à des positions variables, ces porteuses nulles dans la bande passante du système. L'efficacité spectrale totale du système, c'est-à-dire le rapport entre le débit utile et la bande totale du système, n'est pas modifiée puisque le procédé exploite les porteuses nulles localisées aux bords du spectre. Ainsi, contrairement aux dispositifs d'entrelacement connus, qui compte tenu de leur faible efficacité vis-à-vis des variations Doppler sont de fait appliqués sur les données utiles à transmettre et non sur des données dédiées à la signalisation, à l'estimation du canal de transmission ou à la synchronisation, un procédé selon l'invention peut exploiter des données non utiles, une partie des porteuses nulles d'un multiplex orthogonal.

L'intégration de porteuses nulles dans la bande passante du système améliore la décorrelation des porteuses et réduit la perte d'orthogonalité des porteuses en particulier dans le cas où le canal de transmission est dispersif, en particulier en accroissant l'écart interporteuse des porteuses au voisinage d'une porteuse nulle dans le multiplex orthogonal. Un tel procédé permet de modifier les propriétés du canal de transmission dans le domaine temporel et fréquentiel et de réduire conjointement la corrélation fréquentielle et la corrélation temporelle qui affecte un système, en particulier de type OFDM. Ce procédé s'avère particulièrement intéressant pour des systèmes à courte portée délivrant des débits élevés et nécessitant de fait des profondeurs d'entrelacement faibles effectués en amont de l'invention. C'est le cas des systèmes Ultra Large Bande, tels que le système défini par le groupe de travail 802.15.3a TG constitué par l'alliance MBOA, dont les références sont "Physical Layer Submission to 802.15 Task Group 3a : Multi-Band Orthogonal Frequency Division Multiplexing", MBOA website, September 14, 2004, des systèmes définis en bande millimétrique (large bande et ultra large bande) ou bien des systèmes de type Boucle Locale Radio comme défini dans la norme IEEE Std 802.16-2004, IEEE Standard for Local and metropolitan area networks, Part 16: Air Interface for Fixed Broadband Wireless Access Systems, October 2004. Le procédé s'avère en outre pertinent pour des systèmes affectés d'une forte dispersion Doppler. L'introduction de porteuses nulles à des positions variables dans le temps permet de réduire la perte d'orthogonalité entre porteuses tout en assurant un blanchiement de la perturbation générée par le canal de transmission sur le signal de communication. Typiquement, le nombre de symboles nuls ajoutés lors de l'entrelacement fréquentiel est ajusté suivant une connaissance à priori des propriétés de corrélation du canal de transmission et du nombre de porteuses nulles classiquement ajoutées lors d'une modulation OFDM.

Le fait que les symboles ajoutés soient nuls permet de ne pas introduire de bruit supplémentaire.

Selon un mode particulier de réalisation, la modification conjointe est obtenue au moyen d'un algorithme d'entrelacement itératif appliqué sur les symboles nuls et les symboles de données, avec une loi d'entrelacement qui varie par exemple suivant l'itération considérée. Cet algorithme a fait l'objet d'une demande de brevet français N° FR0 04 141 13. Typiquement, après N symboles orthogonaux modulés, l'algorithme utilise une loi d'entrelacement différente par le nombre d'itérations ou par les paramètres de l'entrelacement, suivant les contraintes et optimisations globales du système de transmission.

Une loi d'entrelacement I(k) d'un bloc de taille K est une fonction bijective qui donne l'ordre suivant lequel doit être lue, en sortie, une séquence d'entrée formée par K données indicées par un indice k variant de 0 à K-1. Soit $X(k)$ une séquence en entrée d'un entrelaceur de loi d'entrelacement I(k). Soit $Y(k)$ la séquence en sortie de l'entrelaceur. Alors $Y(k) = X(I(k))$ : la kième donnée de la séquence entrelacée ayant l'indice de position k-1 correspond à la donnée d'indice I(k-1) de la séquence d'entrée X(0),...,X(K-1). Les données d'entrée à entrelacer et les données entrelacées de sortie sont représentées dans la suite du document uniquement par leur indice k, sauf indication contraire.

D'autres caractéristiques et avantages de l'invention apparaîtront lors de la description qui suit faite en regard de figures annexées données à titre d'exemples non limitatifs.

La figure 1 est un schéma illustrant un procédé d'entrelacement selon l'art antérieur.

La figure 2 est un schéma d'un système de transmission particulier avec un entrelacement selon l'invention.

La figure 3 est un schéma de principe d'un mode particulier de réalisation d'un procédé selon l'invention avec insertion de no symboles nuls.

La figure 4 est un schéma de principe d'un entrelaceur mettant en oeuvre un algorithme d'entrelacement itératif permettant d'obtenir une loi d'entrelacement variable dans le temps pour un procédé selon l'invention.

La figure 5 est une représentation graphique illustrant un cas particulier d'optimisation d'un entrelacement selon l'invention.

La figure 6 est un schéma illustrant un premier exemple de mise en oeuvre d'un entrelacement selon l'invention dans un système particulier d'émission/réception OFDM.

La figure 7 est un schéma illustrant un deuxième exemple de mise en oeuvre d'un entrelacement selon l'invention dans un système particulier d'émission/réception OFDM.

La figure 2 est un schéma d'un exemple d'un système 1 de transmission mettant en oeuvre un procédé 2 d'entrelacement selon l'invention. Le système de transmission comprend un dispositif 3 d'émission multi porteuses et un dispositif 4 de réception. Le dispositif 3 d'émission comprend un module 5 de génération de données sources, un module 6 de codage canal, un module 7 d'entrelacement binaire, un module 8 de codage binaire à symbole, un entrelaceur 9 fréquentiel, un dispositif de mise en trame 10, un modulateur OFDM 11 qui comprend un multiplex OFDM.

L'entrelaceur 9 fréquentiel de symboles comprend en particulier un dispositif de calcul de la loi d'entrelacement tel que la loi d'entrelacement bloc calculée est variable dans le temps pour un mode de transmission donné du dispositif 3 d'émission multi porteuses. Le dispositif de mise en trame 10 répartit les symboles de données et les symboles pilotes dans le multiplex.

Le dispositif 4 de réception comprend un module de desentrelacement qui effectue un desentrelacement de symboles démodulés selon une loi inverse à une loi d'entrelacement. Ce module de desentrelacement est apte à calculer à des instants déterminés la loi de desentrelacement qui varie avec le temps pour un mode de transmission donné.

Un procédé 2 d'entrelacement selon l'invention est mis en oeuvre par l'entrelaceur 9 fréquentiel du dispositif 3 d'émission. Il s'applique sur les symboles de données SD issus du codage binaire à symbole.

Le procédé 2 entrelace des symboles de données SD successifs suivant une loi d'entrelacement déterminée. Selon l'invention, la loi d'entrelacement est variable dans le temps pour un mode de transmission donné. Les symboles de données SD entrelacés selon le procédé d'entrelacement sont affectés à un ou plusieurs ensembles de Npm porteuses de données du multiplex OFDM.

Le multiplex OFDM comprend $N_{FFT}$ porteuses, $Npm \leq N_{FFT}$.

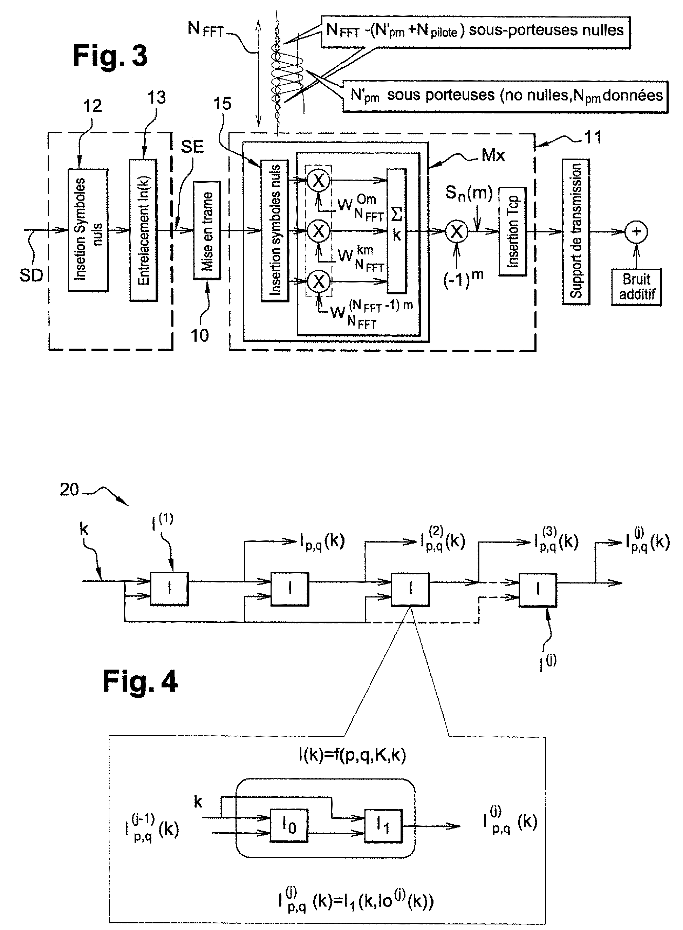

La figure 3 est un schéma de principe d'un mode particulier de réalisation d'un procédé selon l'invention avec insertion de no symboles nuls.

Les symboles de données SD en bande de base, constitués par n bits codés convertis sous la forme de signaux complexes sont partitionnés en groupes de Npm symboles contigus. no symboles nuls sont ajoutés 12 suivant une répartition quasi symétrique aux extrémités de chaque groupe de Npm symboles de données pour former un bloc constitué par N'pm symboles. no peut varier typiquement entre zéro et un nombre $n_{max}$ correspondant à environ 10% du nombre Npm de symboles de données ou correspondant typiquement à (NFFT-Npm-Npilotes)/2 où Npilotes correspond au nombre de symboles pilotes par multiplex OFDM dédiés à l'estimation de canal, à un dispositif de synchronisation ou de signalisation. Cette limite $n_{max}$ est fixée empiriquement.

Dans chaque bloc de N'pm symboles, la position des symboles est indicée par l'entier k variant de 0 à N'pm-1 et correspond à l'indice des porteuses. Une loi d'entrelacement In(k) de taille N'pm d'indice temporel n variant de 1 à NN' où NN' correspond au nombre de lois d'entrelacement différentes mises en oeuvre est appliquée 13 sur chaque bloc de N'pm symboles. Cette loi varie temporellement, tous les N symboles OFDM. Les N'pm symboles Se entrelacés sont mis en trame 10. Conformément à la génération classique d'un signal OFDM en temps, réalisée au moyen d'une transformée de Fourier inverse de taille $N_{FFT}$, des symboles pilotes sont optionnellement ajoutés lors de la mise en trame 10 et n1 symboles nuls sont insérés 15 de façon symétrique aux extrémités d'un multiplex constitué par les N'pm+ Npilotes branches pour former un multiplex OFDM Mx à $N_{FFT}$ branches, $N'pm \leq N_{FFT}$.

Chaque porteuses fk d'indice k du multiplex OFDM Mx module un symbole de la branche k à l'aide de la composante de Fourier :

$$w_{N_{FFT}}^{km} = exp( j2\pi \frac{km}{N_{FFT}} )$$

où k varie de 0 à $N_{FFT}$-1, sous réserve que les échantillons soient alternativement multipliés par $(-1)^m$ en sortie de la transformée de Fourier inverse, et où m correspond à l'indice de l'échantillon en sortie du multiplex OFDM Mx.

Le nombre n1 de symboles nuls ajoutés 15 aux extrémités du multiplex Mx après mise en trame 10 dépend de la taille $N_{FFT}$ de la Transformée de Fourier Directe Inverse, TFDI, de la taille d'un groupe de symboles de données, Npm, du nombre de symboles nuls no ajoutés 12 pour former un bloc de taille N'pm symboles et du nombre de symboles pilotes Npilotes ajoutés lors de la mise en trame 10, n1 = $N_{FFT}$ - N'pm-Npilotes = $N_{FFT}$ -(Npm+no)-Npilotes. Le nombre de porteuses dites nulles auxquelles sont destinées un symbole nul est donc égal à no plus n1.

La figure 4 est un schéma de principe d'un dispositif d'entrelacement mettant en oeuvre un algorithme d'entrelacement itératif permettant d'obtenir une loi d'entrelacement variable dans le temps en modifiant les paramètres de l'entrelacement ou le nombre d'itérations pour un procédé selon l'invention.

Le dispositif 20 d'entrelacement mettant en oeuvre l'algorithme comprend autant de cellules de base I que d'itérations. La sortie de la jième cellule $I_j$ de base, qui correspond à la jième itération, fournit une séquence entrelacée qui s'exprime sous la forme $I_{p,q}^{(j)}(k)$. La mise en oeuvre de l'algorithme permet d'effectuer un entrelacement bloc de taille K à J itérations d'indice j, J étant supérieur ou égal à 1, de données numériques d'entrée indicées par une variable $k = \{0,....,K-1\}$.

Chaque cellule de base I du dispositif 20 d'entrelacement présente la même structure : deux entrées, une sortie et deux cellules élémentaires, notées $I_0$ et $I_1$. Chaque cellule élémentaire $I_0$, $I_1$, comporte deux entrées et une sortie. Les deux entrées de la cellule élémentaire $I_0$ correspondent aux deux entrées de la cellule de base I à laquelle elle appartient, la sortie de la cellule élémentaire $I_1$ correspond à la sortie de la cellule de base I à laquelle elle appartient. La sortie de la cellule élémentaire $I_0$ est reliée à une entrée de la cellule élémentaire $I_1$. La seconde entrée de la cellule élémentaire $I_1$ est reliée à une entrée de la cellule de base I ; cette entrée de la cellule de base I étant alimentée par les indices k à entrelacer qui se présentent généralement sous la forme d'une rampe de 0 à K-1. La seconde entrée de la cellule de base 1 est reliée à la sortie de la cellule de base I précédente, sauf pour la première cellule $I_1$ de base, pour laquelle les deux entrées sont reliées entre elles et correspondent à l'indice k.

L'algorithme d'entrelacement repose ainsi sur une structure itérative pour laquelle la loi d'entrelacement dépend de trois paramètres (K, p, q) et de l'itération considérée j. K correspond à la taille du bloc à entrelacer, p et q sont deux paramètres qui modifient les propriétés du dispositif d'entrelacement, notamment la loi d'entrelacement et la dispersion. Le choix de l'itération permet de modifier la loi d'entrelacement et la dispersion tout en conservant un motif de taille p. La variation dans le temps de la loi d'entrelacement est obtenue en modifiant soit l'itération, soit un des paramètres p et q du dispositif d'entrelacement.

Cet entrelacement qui repose sur la combinaison de deux fonctions algébriques Io et I1 à structure 'turbo', a la propriété de préserver un motif, c'est-à-dire de conserver l'ordre de multiplexage de p flux de données après entrelacement. Cette propriété s'avère très intéressante pour préserver des opérations d'optimisation reposant sur un multiplexage de p données réalisées en amont ou en aval de l'opération d'entrelacement.

La loi d'entrelacement $I_{p,q}^{(j)}(k)$ correspondant aux paramètres p et q et l'itération j, résulte de la combinaison de deux fonctions algébriques à deux entrées et une sortie. Pour l'itération j=1, un motif de taille p et un paramètre q, cette loi s'exprime par les équations :

$$I_{o,p,q}(k,k1) = [-k - k_1 \cdot p]_K \quad k = \{0,....,K-1\}$$

$$I_{1,p,q}(k,k_1) = \left[ K - p + k + q \cdot p \cdot k_1 \right]_K \quad k = \{0,....,K-1\}$$

$$I_{p,q}(k,k1) = I_1(k, Io(k,k1))$$

et le bloc d'équations (2) :

$$I_{p,q}(k) = \left[ K - p + k + q \cdot p \cdot I_{p,q}^0(k) \right]_K \quad k = \{0,....,K-1\}$$

$$I_{p,q}^0(k) = \left[ -k - p \cdot k \right]_K \qquad\qquad (2)$$

$$I_{p,q}(k) = \left[ K - p + k + q \cdot p \cdot \left[ -k - p \cdot k \right]_K \right]_K \quad k = \{0,....,K-1\}$$

Pour l'itération j, le bloc d'équations (2) est de la forme :

$$I_0^{(j)}(k) = \left[ -k - p \cdot I^{(j-1)}(k) \right]_K \quad k = \{0,....,K-1\}$$

$$I_{p,q}^{(j)}(k) = \left[ K - p + k + q \cdot p \cdot I_0^{(j)}(k) \right]_K \quad k = \{0,....,K-1\} \qquad (3)$$

$$I^{(j)}(k) = \left[ K - p + k + q \cdot p \cdot \left[ -k - p \cdot I_{p,q}^{(j-1)}(k) \right]_K \right]_K \quad k = \{0,....,K-1\}$$

La séquence des données de sortie entrelacées Y(k) est reliée à la séquence des données d'entrée avant entrelacement X(k) par la relation :

$$Y(k) = X(I_{p,q}^{(j)}(k)).$$

La structure pseudo périodique et algébrique de l'algorithme permet de pré-calculer la dispersion $\underset{0 \le k \le K-1}{Min} \left| I_{p,q}^{(j)}(k+s) - I_{p,q}^{(j)}(k) \right|$ entre bits ou échantillons séparés par s-1 échantillons.

La dispersion correspond à la distance minimale entre les indices de position des échantillons séparés par s-1 échantillons de la séquence d'entrée après entrelacement.

La dispersion $\Delta_{eff} I_{p,q}^{(j)}(s)$ est déterminée à partir d'un polynôme Pj,p,q,s(k) :

$$P_{j,p,q,s}(k) = I_{p,q}^{(j)}(k+s) - I_{p,q}^{(j)}(k) = s - \left[ q \cdot p \cdot (s + p \cdot P_{j-1,s}(k)) \right]_K$$

$$\Delta_{eff} I_{p,q}^{(j)}(s) = Min_k \left\{ \left| P_{j,p,q,s}(k) \right|, K - \left| P_{j,p,q,s}(k) \right| \right\} \qquad (4)$$

$$\Delta_{eff} I_{p,q}^{(j)}(s) = Min_k \left\{ \left| s - \left[ q \cdot p(s + p \cdot P_{j,p,q,s}(k)) \right]_K \right|, K - \left| s - \left[ q \cdot p \cdot (s + p \cdot P_{j,p,q,s}(k)) \right]_K \right| \right\}$$

Cette fonction algébrique Pj,p,q,s(k) dépend des paramètres p et q de l'entrelacement, où p correspond à la plus grande taille du motif préservé et q est un paramètre qui modifie la loi d'entrelacement, et de l'itération j considérée.

Selon un mode particulier de réalisation, un procédé selon l'invention comprend un tel algorithme d'entrelacement itératif et un entrelaceur 9 fréquentiel selon l'invention comprend un tel dispositif 20 d'entrelacement, avec une taille K correspondant au nombre de symboles par symbole orthogonal modulé, typiquement symbole OFDM, donc K= N'pm. La loi d'entrelacement varie temporellement, par exemple tous les N symboles orthogonaux modulés, typiquement N symboles OFDM, en modifiant soit le nombre d'itérations, soit un des paramètres p et q du dispositif d'entrelacement pour un mode de transmission donné. Les paramètres de l'algorithme d'entrelacement itératif sont alors indicés par un paramètre n qui est incrémenté tous les N symboles OFDM et dont la valeur maximale correspond au nombre de lois d'entrelacement différentes.

La loi d'entrelacement donnée par les blocs d'équations (2) et (3) est modifiée pour prendre en compte le caractère dynamique de cette loi comme suit : $p_n$, $q_n$ et $j_n$ sont les paramètres choisis pour la loi $In(k)$ et NN' correspond au nombre de lois considérées.

$$In(k) = I_{p_n,q_n}^{(j_n)}(k)$$

$$I_{p_n,q_n}^{(j_n)}(k) = \left[ N'_{pm} - p_n + k + q_n \cdot p_n \cdot \left[ -k - p_n \cdot I_{p_n,q_n}^{(j_n-1)}(k) \right]_{N'_{pm}} \right]_{N'_{pm}} \qquad (5)$$

$$k = \{0,....,N'_{pm} - 1\}$$

La relation entre l'indice n, indiquant une variation de la loi d'entrelacement et l'indice m associé à l'émission du symbole modulé, typiquement symbole OFDM, à l'instant $mT_{SYM}$ dépend du nombre N de symboles modulés typiquement OFDM, pour lequel la loi d'entrelacement est inchangée :

$$n = E\left\{ \frac{m+N}{N} \right\}, m = \{0,....,n \cdot N - 1\} \qquad (6)$$

où E{x} désigne la partie entière de x.

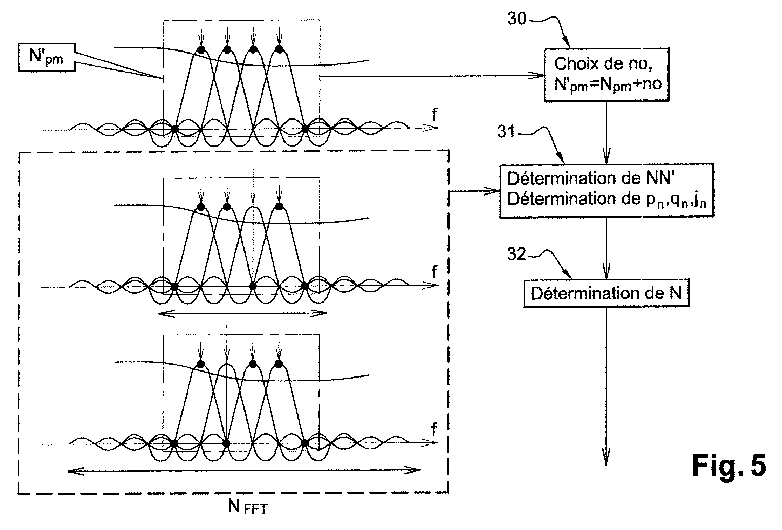

L'exemple suivant auquel correspond la figure 5 permet d'illustrer une optimisation d'un mode particulier de réalisation d'un procédé selon l'invention.

L'optimisation du procédé consiste dans une première étape 30 à définir le nombre no de symboles nuls à ajouter dans le procédé d'entrelacement fréquentiel pour définir la taille N'pm du bloc à entrelacer. Le nombre no est ajusté empiriquement en fonction des propriétés du canal de transmission, de la modulation considérée, des performances radio au niveau lien et de la canalisation du système (bande de transmission du signal émis). En pratique, no est choisi au plus égal à la moitié du nombre total de porteuses nulles classiquement ajoutées aux extrémités du multiplex orthogonal,

$$no \leq (N_{FFT} - Npm - Npilotes)/2, \quad N'pm = Npm + no.$$

Si le système comporte un nombre trop restreint de porteuses nulles classiquement ajoutées aux extrémités du multiplex orthogonal ou bien n'en dispose pas, alors aucun symbole nul n'est ajouté lors de l'entrelacement fréquentiel et N'pm=Npm. L'invention consiste alors à effectuer un entrelacement fréquentiel des symboles de données dont la taille M est multiple de Npm, variable dans le temps, par exemple tous les N symboles orthogonaux modulés, typiquement N symboles OFDM.

Une deuxième étape 31 d'optimisation consiste à déterminer le nombre NN' et le type de lois d'entrelacement In(k) à mettre en oeuvre suivant l'algorithme itératif décrit en regard de la figure 4. Cet algorithme génère une loi d'entrelacement d'indice n inférieur ou égal à NN', d'une part suivant un paramètre $p_n$ qui préserve un motif et modifie la dispersion, et d'autre part suivant un paramètre $q_n$ et une itération $j_n$ qui modifient la dispersion. Le nombre NN' de lois différentes est défini en fonction des valeurs possibles pour le paramètre $p_n$ qui est un sous-multiple de la taille N'pm ou M du bloc d'entrelacement selon que l'on insère des porteuses nulles ou pas dans le bloc à entrelacer et de la dispersion associée aux différentes itérations de l'algorithme. $p_n$ doit être dans tous les cas sous multiple de la taille du bloc d'entrelacement. Deux configurations peuvent se présenter. Première configuration : il n'existe aucune contrainte associée à un regroupement de porteuses à conservation de motif dans le multiplex OFDM. Les différentes valeurs possibles de $p_n$ sont alors les sous-multiples de la taille du bloc à entrelacer. La taille du bloc à entrelacer est égal à N'pm dans le cas d'insertion de porteuses nulles et se rapporte à un seul multiplex orthogonal ou bien est égal à M et se rapporte à l'entrelacement de symboles de données affectés à plusieurs symboles orthogonaux modulés. Le choix de $p_n$ est régi par la valeur de la dispersion associée à l'itération j qui fournit la dispersion la plus élevée entre porteuses adjacentes et porteuses séparées de s-1 porteuses. Seconde configuration : il existe une contrainte associée à un regroupement de porteuses à conservation de motif de taille pl. La valeur de $p_n$ choisie pour l'entrelacement doit alors être multiple de p1 et préférentiellement égale à pl. Pour cette seconde configuration, les valeurs du paramètre $q_n$ et

de l'itération $j_n$ sont sélectionnées pour augmenter la dispersion d'entrelacement entre porteuses séparées par s-1 porteuses. s est en pratique inférieur à trois pour assurer une décorrélation entre porteuses adjacentes.

Lors d'une troisième étape 32, la valeur de N est déterminée en fonction des propriétés du canal et de la taille du bloc à entrelacer et du nombre de lois d'entrelacement NN' considéré.

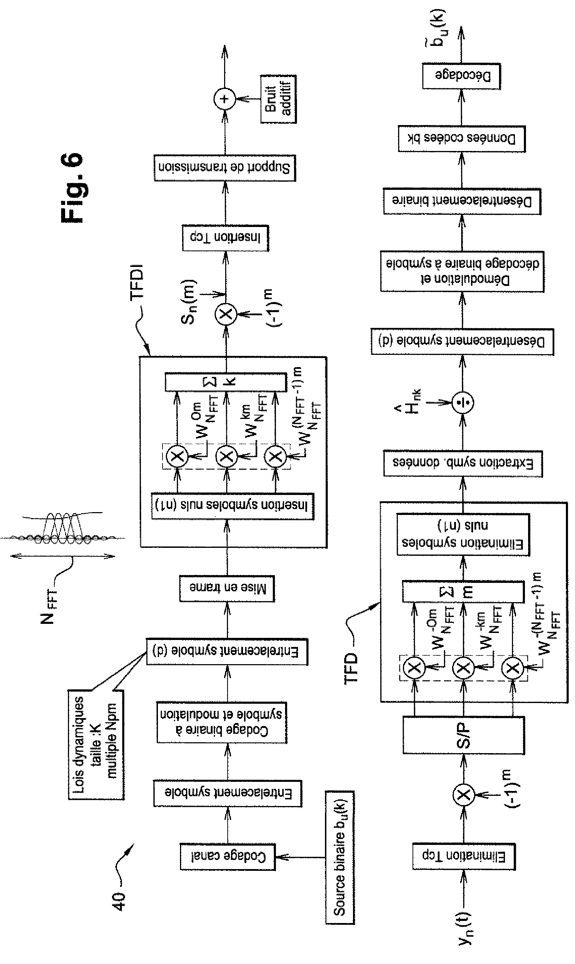

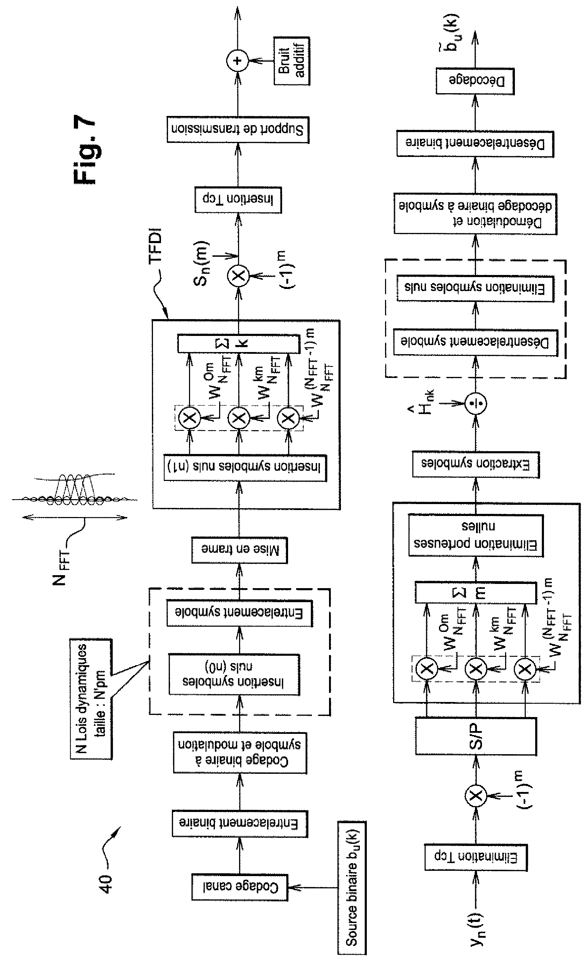

Un exemple de mise en oeuvre d'un entrelacement selon l'invention est décrit ci-après en regard des schémas de la figure 6 et de la figure 7 d'un système d'émission/réception OFDM mettant en oeuvre un tel procédé.

Le système 40 radio d'émission/réception OFDM fonctionne en bande millimétrique à 60 GHz. Ce système met en oeuvre une modulation OFDM pour laquelle des symboles de données QPSK et des symboles 16-QAM sont transmis sur Npm porteuses. La taille de la transformée de Fourier Discrète Inverse, TFDI, est supérieure à Npm et permet l'ajout de porteuses nulles. Selon un premier exemple décrit, auquel correspond la figure 6, correspondant à une configuration V0, aucune porteuse nulle n'est intégrée dans la bande du multiplex OFDM et la taille de la FFT est inchangée, le procédé d'entrelacement fréquentiel selon l'invention entrelace uniquement des symboles de données sans ajout de symboles nuls. Selon un second exemple décrit, auquel correspond la figure 7, correspondant à une configuration V1, des porteuses nulles sont intégrées dans la bande du multiplex OFDM selon un procédé d'entrelacement fréquentiel selon l'invention. Pour chacun des deux exemples, deux modes de transmission différents sont considérées :

- Un premier mode défini par une largeur de bande de transmission supérieure à 500 MHz correspondant à une transmission Ultra Large Bande (UWB selon une terminologie anglo-saxonne).
- Un second mode défini par une largeur de bande de 200 MHz correspondant à un mode dit large bande (WB selon une terminologie anglo-saxonne).

Pour ces deux bandes de transmission, des paramètres OFDM sont déterminés tels que le rapport x entre la durée du symbole OFDM utile $T_{FFT}$ et la taille du préfixe cyclique $T_{CP}$ soit proche de la valeur huit. Par ailleurs, la taille du préfixe cyclique est imposée par l'excursion maximale des retards du profil de puissance du canal de propagation $P(\tau)$ et est de l'ordre de 177 ns. $P(\tau)$ est donné par :

$$P(\tau) = <|h(t,\tau)|^2>_t = \sum_i < a_{i,n} >_n \cdot \delta(\tau - < \tau_{i,n} >_n) \qquad (7)$$

$<x>_t$ représente la valeur moyenne temporelle du signal x suivant la variable t. t représente les retards. Après échantillonnage discret de la réponse impulsionnelle $h(t,\tau)$ du canal, la variable n est affectée à la variable t et la variable i aux retards $\tau_i$.

Ceci impose donc un écart inter-porteuse $\Delta_{FFT}$ quasi identique pour ces deux modes de transmission ($\Delta_{FFT} = T_{FFT}^{-1} = (x\ T_{cp})^{-1}$). Seul le nombre de porteuses de données est modifié en fonction de la taille de la bande.

Une mise en oeuvre d'un procédé d'entrelacement fréquentiel selon l'invention conduit à définir une taille d'entrelacement fréquentiel (qui dépend de la taille de la FFT, du nombre Npm de porteuses de données et du nombre no de porteuses nulles) pour chaque mode (UWB et WB) de transmission. Quatre tailles d'entrelacement fréquentiels sont donc considérées pour les deux exemples décrits.

Les bits utiles issus de la source sont encodés à l'aide d'un code convolutif de rendement 1/3 et de longueur de contrainte M=7 à l'aide des polynômes générateurs {g0, g1, g2} = {$133_o$, $145_o$, $171_o$}. Ce code est poinçonné pour donner lieu à un rendement de code r=5/8. Les données codées (bits codés) sont entrelacées à l'aide d'un entrelaceur matriciel à deux étages dérivés des spécifications de la norme MBOA. Les données entrelacées sont mises en forme à l'aide d'une opération de codage binaire à symbole pour former des symboles de données dans le domaine complexe. La modulation est à enveloppe constante à deux états de phase (QPSK) avec une modulation d'amplitude et de phase à 16 états.

Ces symboles sont ensuite entrelacés suivant un procédé d'entrelacement fréquentiel selon l'invention.

Les paramètres OFDM sont décrits par le nombre de porteuses de données prises en compte (Npm), la taille de la transformée de Fourier ($N_{FFT}$), la fréquence d'échantillonnage (Fe) et la durée de l'intervalle de garde ou préfixe cyclique Tcp. Ces quatre paramètres permettent de déterminer la durée utile du symbole OFDM ($T_{FFT}$), la durée totale du symbole OFDM $T_{SYM}$ avec le préfixe cyclique, l'écart interporteuse $\Delta_{FFT}$, le débit, etc...

$$T_{FFT} = \frac{F_e}{N_{FFT}}, \Delta_F = \frac{1}{T_{FFT}}$$

$$T_{SYM} = T_{FFT} + T_{CP} = (x+1)T_{CP}$$

$$Du = \frac{mR \cdot Npm}{T_{SYM}} = \frac{mR \cdot Npm \cdot (1-ro)}{(x+1) \cdot T_{CP}} \, (débit) \tag{8}$$

$$\frac{Du}{B_T} = \frac{mR \cdot Npm \cdot (1-ro)}{(x+1) \cdot T_{CP}} \cdot \frac{xT_{CP}}{N_{FFT}} = mR \cdot \frac{N_{pm}}{N_{FFT}} \cdot \frac{x}{x+1} (1-ro)$$

$$Eff\_spectrale\ utile = \frac{Du}{Bw} = mR \cdot \frac{x}{x+1} \cdot (1-ro)$$

Les paramètres OFDM sont données dans le tableau 1 en annexe 1.

Pour le mode WB, 280 porteuses de données sont considérées et 40 porteuses nulles sont exploitées dans le procédé d'entrelacement fréquentiel selon l'invention. La taille de la FFT, $N_{FFT}$, est de 360. Les deux tailles de matrices à considérer sont donc Npm=280{configuration V0} et N'pm=320{configuration VI}. Le ratio entre le nombre de porteuses de données et le nombre de porteuses nulles est de sept.

Pour le mode UWB, 736 porteuses de données sont considérées et 16 porteuses nulles sont exploitées dans le procédé d'entrelacement fréquentiel selon l'invention. Les tailles de matrices à considérer sont donc de N'pm=736 (configuration V0) et N'pm=752(configuration VI).

La configuration V0 correspond à un mode de réalisation d'un procédé selon l'invention dans lequel seul est effectué un entrelacement dynamique de symboles de données sans ajout de symbole nul. Pour cette configuration, une matrice d'entrelacement de taille Npm est générée pour produire un entrelacement dynamique. La loi de variation de cette matrice est modifiée à chaque symbole OFDM à l'aide de l'algorithme d'entrelacement itératif préalablement décrit en regard de la figure 4, deux permutations I1(k) et I2(k) sont donc considérées. Le tableau 2 en annexe 2 donne, pour le mode WB, différentes valeurs possibles pour p, pour un q fixé à la valeur 2, pour trois itérations possibles et pour chaque taille Npm. Le tableau 3 en annexe 2 donne différentes valeurs possibles pour p, pour un q fixé à la valeur 2, pour trois itérations possibles et pour chaque taille Npm, pour le mode UWB.

La configuration V1 correspond à un mode de réalisation d'un procédé selon l'invention dans lequel il y a insertion de symboles nuls et entrelacement dynamique de N'pm symboles. Pour cette configuration, une matrice d'entrelacement de taille N'pm est générée pour produire un entrelacement dynamique. La loi de variation de cette matrice est modifiée à chaque symbole OFDM à l'aide de l'algorithme d'entrelacement itératif décrit préalablement en regard de la figure 4, deux permutations I1(k) et I2(k) sont donc considérées. Le tableau 4 en annexe 3 donne différentes valeurs possibles pour p, pour un q fixé à la valeur 2, pour trois itérations possibles et pour chaque taille N'pm, pour le mode WB. Le tableau 5 en annexe 3 donne différentes valeurs possibles pour p, pour un q fixé à la valeur 2 , pour trois itérations possibles et pour chaque taille N'pm, pour le mode UWB.

Les paramètres choisis pour définir les lois I1(k) et I2(k) sont ceux qui fournissent la dispersion maximale. Les valeurs sélectionnées de p et j sont celles qui fournissent une dispersion maximale entre porteuses adjacentes et entre deux porteuses séparées par une sous-porteuse (s=2). Par exemple, pour le mode WB et les deux tailles de matrices, les valeurs suivantes peuvent être sélectionnée : p-10, q=2 et itérations j=1 ou 2. Pour le mode UWB, pour la taille Npm=736, les valeurs {p=4, j=2} et {p=16,j=1} peuvent être sélectionnées, pour la taille N'pm=752, les valeurs p=16 et j=1 ou 3 peuvent être sélectionnées. Pour la sélection, la dispersion est prise en considération mais également la répartition des échantillons. Dans certaines configurations, deux lois d'entrelacement différentes peuvent présenter la même dispersion. Les lois choisies doivent présenter un motif d'entrelacement différent.

Un procédé selon l'invention peut être implémenté par différents moyens. Par exemple, le procédé peut être implémenté sous forme câblée (hardware), sous forme logicielle, ou par une combinaison des deux.

Pour une implémentation câblée, l'entrelaceur fréquentiel 9 ou certains des éléments de l'entrelaceur fréquentiel 9 utilisés (par exemple le dispositif d'entrelacement 20) pour exécuter les différentes étapes au niveau de l'émetteur peuvent être intégrés dans un ou plusieurs circuits intégrés spécifiques (ASICs), dans des processeurs de signaux (DSPs, DSPDs), dans des circuits logiques programmables (PLDs, FPGAs), dans des contrôleurs, micro-contrôleurs, microprocesseurs, ou tout autre composant électronique conçu pour exécuter les fonctions préalablement décrites.

Pour une implémentation logicielle, quelques unes ou toutes les étapes (référencées 12, 13, et pour certaines réalisations 30, 31, 32) d'un procédé d'entrelacement peuvent être implémentées par des modules qui exécutent les fonctions préalablement décrites. Le code logiciel peut être stocké dans une mémoire et exécuté par un processeur. La mémoire peut faire partie du processeur ou être externe au processeur et couplée à ce dernier par des moyens connus de l'homme de l'art.

En conséquence, l'invention a aussi pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

ANNEXE 1

Tableau 1 : paramètres OFDM

| Paramètres système | Mode WB | Mode UWB |
|---|---|---|
| Taille de la FFT | 360 | 768 |
| Fréquence d'échantillonnage Fe (MHz) | 256 | 528 |
| Bande utile Bw (MHz) | 199.5 | 506.01 |
| $N_{pm}$: nombre de sous-porteuses de données /symbole OFDM | 280 | 736 |
| $\Delta_F$: Ecart inter-porteuse (MHz) | 0.710 | 0.69 |
| $T_{FFT}$: durée utile du symbole OFDM (ns) | 1406 | 1454 |
| $T_{CP}$: durée du préfixe cyclique (ns) | 176 | 178 |
| $x=T_{FFT}/T_{CP}$ | 8 | 8.17 |
| $T_{SYM}$: durée totale du symbole OFDM(ns) | 1582 | 1632 |
| Période entrelacement binaire $(\lambda/n)/\mu s$ | $(\lambda/527)$ 9.49 | $(\lambda/527)$ 9.47 |
| Ratio de pilotes dans la trame | 1/7 | 1/7 |
| $10*Log_{10}(T_{FFT}/T_{SYM})$ (dB) | -0.51 | -0.501 |

ANNEXE 2

Tableau 2 : Valeurs possibles pour les matrices d'entrelacement pour le mode WB (configuration V0).

| taille K | P | q | $\Delta I(s=1)$ | $\Delta I(s=2)$ | $\Delta I^{(2)}(s=1)$ | $\Delta I^{(2)}(s=2)$ | $\Delta I^{(3)}(s=1)$ | $\Delta I^{(3)}(s=1)$ |
|---|---|---|---|---|---|---|---|---|
| 280 | 4 | 2 | 39 | 78 | 121 | 38 | 41 | 34 |
| 280 | 7 | 2 | 111 | 58 | 55 | 110 | 57 | 44 |
| 280 | 10 | 2 | **61** | **122** | **101** | **78** | 59 | 78 |
| 280 | 14 | 2 | 139 | 2 | 139 | 2 | **139** | **114** |
| 280 | 20 | 2 | 1 | 2 | 1 | 2 | 1 | 38 |
| 280 | 28 | 2 | 57 | 114 | 111 | 58 | 113 | 58 |
| 280 | 40 | 2 | 81 | 118 | 1 | 2 | 81 | 2 |

Tableau 3 : Valeurs possibles pour les matrices d'entrelacement pour le mode UWB (configuration V0)

| taille K | P | q | $\Delta I(s=1)$ | $\Delta I(s=2)$ | $\Delta I^{(2)}(s=1)$ | $\Delta I^{(2)}(s=2)$ | $\Delta I^{(3)}(s=1)$ | $\Delta I^{(3)}(s=1)$ |
|---|---|---|---|---|---|---|---|---|
| 736 | 4 | 2 | 39 | 78 | **231** | **274** | 25 | 18 |

(suite)

| taille K | P | q | $\Delta I(s=1)$ | $\Delta I(s=2)$ | $\Delta I^{(2)}(s=1)$ | $\Delta I^{(2)}(s=2)$ | $\Delta I^{(3)}(s=1)$ | $\Delta I^{(3)}(s=1)$ |
|---|---|---|---|---|---|---|---|---|
| 736 | 8 | 2 | 143 | 286 | 111 | 222 | 209 | 194 |
| 736 | 16 | 2 | **193** | **350** | 223 | **290** | 65 | 34 |
| 736 | 32 | 2 | 97 | 194 | 1 | 2 | 97 | 34 |

ANNEXE 3

**Tableau 4 :** Valeurs possibles pour les matrices d'entrelacement pour le mode WB (configuration V1)

| taille K | P | q | $\Delta I(s=1)$ | $\Delta I(s=2)$ | $\Delta I^{(2)}(s=1)$ | $\Delta I^{(2)}(s=2)$ | $\Delta I^{(3)}(s=1)$ | $\Delta I^{(3)}(s=1)$ |
|---|---|---|---|---|---|---|---|---|
| 320 | 4 | 2 | 39 | 78 | 39 | 78 | 39 | 46 |
| 320 | 8 | 2 | 143 | 34 | 49 | 98 | 113 | 98 |
| 320 | 10 | 2 | **101** | **118** | **59** | **118** | 59 | 78 |
| 320 | 16 | 2 | **97** | **126** | **95** | **130** | 31 | 62 |
| 320 | 20 | 2 | 121 | 78 | 121 | 78 | 121 | 82 |
| 320 | 32 | 2 | 129 | 62 | **65** | **130** | 63 | 126 |

**Tableau 5 :** Valeurs possibles pour les matrices d'entrelacement pour le mode UWB (configuration V1)

| taille K | P | q | $\Delta I(s=1)$ | $\Delta I(s=2)$ | $\Delta I^{(2)}(s=1)$ | $\Delta I^{(2)}(s=2)$ | $\Delta I^{(3)}(s=1)$ | $\Delta I^{(3)}(s=1)$ |
|---|---|---|---|---|---|---|---|---|
| 752 | 4 | 2 | 39 | 78 | **263** | **226** | 137 | 130 |
| 752 | 8 | 2 | **143** | **286** | **241** | **270** | 31 | 46 |
| 752 | 16 | 2 | **209** | **334** | 255 | 242 | **319** | **350** |
| 752 | 47 | 2 | 1 | 2 | 1 | 2 | 1 | 92 |

**Revendications**

1. Procédé (2) d'entrelacement fréquentiel de symboles, destinés à être affectés à des porteuses d'un dispositif (3) d'émission multi porteuses comprenant un module de multiplexage et de modulation par $N_{FFT}$ fonctions orthogonales (Mx), consistant à entrelacer (13) un bloc de K symboles suivant une loi d'entrelacement I(k) déterminée, **caractérisé en ce que** la loi d'entrelacement I(k) est obtenue au moyen des relations :

$$I_{p,q}^{0}(k) = \left[ -k - p \cdot k \right]_{K}$$

$$I(k) = I_{p,q}^{(j)}(k) = \left[ K - p + k + q \cdot p \cdot \left[ -k - p \cdot I_{p,q}^{(j-1)}(k) \right]_{K} \right]_{K} \quad k = \{0,....,K-1\}$$

et la loi d'entrelacement bloc est variable dans le temps en faisant varier dans le temps le nombre d'itérations j, un des deux paramètres p et q ou K pour un mode de transmission donné du dispositif d'émission multi porteuses.

2. Procédé (2) d'entrelacement fréquentiel selon la revendication 1 dans lequel la loi d'entrelacement variable dans le temps est obtenue par la sélection d'une loi parmi plusieurs lois d'entrelacement générées au moyen de l'algorithme d'entrelacement itératif.

**3.** Procédé (2) d'entrelacement fréquentiel selon l'une des revendications précédentes, dans lequel le bloc de symboles à entrelacer est de taille Npm inférieure au nombre $N_{FFT}$ de fonctions orthogonales d'un module de multiplexage et de modulation.

**4.** Procédé (2) d'entrelacement fréquentiel selon l'une des revendications précédentes dans lequel le dispositif (3) d'émission multi porteuses comprend $N_{FFT}$ porteuses dont Npm porteuses de données, Npilotes porteuses pilotes et u porteuses auxquelles sont affectées une valeur nulle avec $N_{FFT} = Npm + Npilotes + u$, la loi d'entrelacement étant appliquée à Npm symboles de données successifs complétés par no symboles nuls, avec $0 \leq no \leq u$, u et no étant des paramètres déterminés.

**5.** Procédé (2) d'entrelacement fréquentiel selon la revendication précédente dans lequel les symboles de données affectés aux porteuses de données forment des composantes fréquentielles d'un signal émis par le dispositif (3) d'émission multi porteuses, et dans lequel le nombre no de symboles nuls est déterminé en fonction de propriétés de corrélation d'un canal de transmission du signal émis.

**6.** Procédé (2) d'entrelacement fréquentiel selon l'une des revendications 1 et 2, dans lequel le bloc de symboles à entrelacer est de taille M supérieure au nombre $N_{FFT}$ de fonctions orthogonales du module (Mx) de multiplexage et de modulation, M étant un paramètre déterminé.

**7.** Procédé (2) d'entrelacement fréquentiel selon la revendication précédente dans lequel le dispositif (3) d'émission multi porteuses comprend $N_{FFT}$ porteuses dont Npm porteuses de données, dans lequel la variation temporelle de la loi d'entrelacement intervient tous les N symboles orthogonaux modulés générés par le module (Mx) de multiplexage et de modulation, N étant un paramètre déterminé, et dans lequel la taille M du bloc de symboles à entrelacer est un multiple du nombre Npm de porteuses de données et un sous-multiple de N.

**8.** Entrelaceur (9) fréquentiel de symboles, destinés à être affectés à des porteuses d'un dispositif (3) d'émission multi porteuses comprenant un module (Mx) de multiplexage et de modulation par $N_{FFT}$ fonctions orthogonales, pour entrelacer un bloc de K symboles suivant une loi d'entrelacement déterminée I(k), **caractérisé en ce qu'**il comprend un dispositif de calcul pour calculer la loi d'entrelacement I(k) à partir des relations :

$$I_{p,q}^{0}(k) = \left[ -k - p \cdot k \right]_{K}$$

$$I(k) = I_{p,q}^{(j)}(k) = \left[ K - p + k + q \cdot p \cdot \left[ -k - p \cdot I_{p,q}^{(j-1)}(k) \right]_{K} \right]_{K} \qquad k = \{0,....,K-1\}$$

et pour faire varier dans le temps la loi d'entrelacement bloc calculée I(k) en faisant varier dans le temps le nombre d'itérations j, un des deux paramètres p et q ou K pour un mode de transmission donné du dispositif (3) d'émission multi porteuses.

**9.** Entrelaceur (9) fréquentiel selon la revendication précédente dans lequel le dispositif de calcul comprend un dispositif d'entrelacement (20) bloc de taille K à J itérations d'indice j, J étant supérieur ou égal à 1, de données numériques d'entrée indicées par une variable $k = \{0,...., K-1\}$, comprenant J cellules de base I à deux entrées et une sortie, telles que chaque cellule de base I est formée de deux cellules élémentaires $I_0$ et $I_1$ qui comportent chacune deux entrées et une sortie et qui mettent respectivement en oeuvre deux fonctions algébriques modulo K à deux entrées et une sortie, de paramètres p et q, $I_{o,p,q}(k,k1)$ et $I_{1,p,q}(k,k_1)$, la sortie de la cellule de base I correspondant à la sortie de la cellule élémentaire $I_1$, les deux entrées de la cellule de base I correspondant aux deux entrées de la cellule élémentaire $I_0$, la sortie de la cellule élémentaire $I_0$ correspondant à une première entrée de la cellule élémentaire $I_1$, la seconde entrée de la cellule élémentaire $I_1$ étant reliée à une première entrée de la cellule élémentaire $I_0$ qui correspond à une première entrée de la cellule de base I,

et en ce que les deux entrées de la première cellule de base I sont reliées entre elles et correspondent à l'indice k,
et en ce que la sortie de chaque cellule de base I est reliée à la seconde entrée de la cellule de base I de l'itération suivante,
et en ce que les premières entrées des cellules de base I sont reliées entre elles,
et en ce que la sortie de la cellule J détermine la fonction d'entrelacement I(k) comme étant la combinaison des deux fonctions algébriques :

$$I\left(k\right) = I_{p,q}{}^{(j)}(k) = I_1\left(k, I_0{}^{(j)}(k)\right)$$

avec $k = \{0,....,K\text{-}1\}$, $k_1 = k$ quand j égale un.

**10.** Utilisation d'un entrelaceur (9) fréquentiel de symboles d'indice de position k, effectuant l'entrelacement d'un bloc de symboles suivant une loi d'entrelacement déterminée I(k), **caractérisé en ce qu'**il comprend un dispositif d'entrelacement (20) bloc de taille K, de paramètres p et q déterminés pour une dispersion donnée, composé de J itérations d'indice j d'une structure de base turbo à deux entrées et une sortie mettant en oeuvre en cascade une première fonction algébrique modulo K à deux entrées $I_{o,p,q}(k,k1)$ et une seconde fonction algébrique modulo K à deux entrées $I_{1,p,q}(k,k_1)$, dont une entrée est égale à l'indice de position k des symboles avant entrelacement et une seconde entrée est alimentée par la sortie de l'itération précédente, la sortie de l'itération J déterminant la fonction d'entrelacement I(k) comme étant la combinaison des deux fonctions algébriques :

$$I\left(k\right) = I_{p,q}{}^{(j)}(k) = I_1\left(k, I_0{}^{(j)}(k)\right)$$

avec $k = \{0,...., K\text{-}1\}$, $k_1 = k$ quand j égale un, J étant supérieur ou égal à 1,
pour faire varier l'entrelacement fréquentiel dans le temps de symboles en fonction du choix dans le temps des valeurs de J, de p, de q ou de K.

**11.** Dispositif d'émission comprenant un entrelaceur (9) fréquentiel selon l'une des revendications 8 et 9.

**12.** Dispositif (4) de réception comprenant un module de desentrelacement effectuant un desentrelacement de symboles démodulés selon une loi inverse à une loi d'entrelacement **caractérisé en ce que** le module est apte à calculer à des instants déterminés la loi de desentrelacement, la loi d'entrelacement I(k) variant avec le temps pour un mode de transmission donné et ayant été obtenue au moyen des relations :

$$I_{p,q}^{0}(k) = \left[-k - p \cdot k\right]_K$$

$$I(k) = I_{p,q}^{(j)}(k) = \left[K - p + k + q \cdot p \cdot \left[-k - p \cdot I_{p,q}^{(j-1)}(k)\right]_K\right]_K \quad k = \{0,...., K\text{-}1\}, \text{ dans lequel } j \geq 1, \text{ K est}$$

la taille d'un bloc de symboles et dans lequel la variation dans le temps de la loi d'entrelacement résulte de la variation dans le temps du nombre d'itérations j, d'un des deux paramètres p et q ou de K pour un mode de transmission donné du dispositif d'émission multi porteuses.

**13.** Procédé de réception mis en oeuvre par un dispositif de réception comprenant un module de desentrelacement effectuant un desentrelacement de symboles démodulés selon une loi inverse à une loi d'entrelacement **caractérisé en ce que** le module calcule à des instants déterminés la loi de desentrelacement, la loi d'entrelacement variant avec le temps pour un mode de transmission donné et ayant été obtenue au moyen des relations :

$$I_{p,q}^{0}(k) = \left[-k - p \cdot k\right]_K$$

$$I(k) = I_{p,q}^{(j)}(k) = \left[K - p + k + q \cdot p \cdot \left[-k - p \cdot I_{p,q}^{(j-1)}(k)\right]_K\right]_K \quad k = \{0,...., K\text{-}1\}, \text{ dans lequel } j \geq 1, \text{ K est}$$

la taille d'un bloc de symboles et dans lequel la variation dans le temps de la loi d'entrelacement résulte de la variation dans le temps du nombre d'itérations j, d'un des deux paramètres p et q ou de K pour un mode de transmission donné du dispositif d'émission multi porteuses.

**Patentansprüche**

1. Verfahren (2) zur Frequenzverschachtelung von Symbolen, die dazu bestimmt sind, Trägern einer Mehrträger-Sendevorrichtung (3) zugewiesen zu werden, die ein Multiplex- und Modulationsmodul (Mx) durch $N_{FFT}$ orthogonale Funktionen enthält, das darin besteht, einen Block von K Symbolen gemäß einem bestimmten Verschachtelungsgesetz I(k) zu verschachteln (13), **dadurch gekennzeichnet, dass** das Verschachtelungsgesetz I(k) mittels der Beziehungen erhalten wird:

$$I_{p,q}^{0}(k) = [-k - p.k]_K$$

$$I(k) = I_{p,q}^{(j)}(k) = \left[K - p + k + q \cdot p \cdot \left[-k - p \cdot I_{p,q}^{(j-1)}(k)\right]_K\right]_K$$

$$k = \{0, \ldots, K - 1\}$$

und das Blockverschachtelungsgesetz ist zeitlich veränderlich, indem die Anzahl von Iterationen j, einer der zwei Parameter p und q oder K für einen gegebenen Übertragungsmodus der Mehrträger-Sendevorrichtung zeitlich geändert werden.

2. Verfahren (2) zur Frequenzverschachtelung nach Anspruch 1, wobei das zeitlich veränderliche Verschachtelungsgesetz durch die Wahl eines Gesetzes unter mehreren Verschachtelungsgesetzen erhalten wird, die mittels des iterativen Verschachtelungsalgorithmus generiert werden.

3. Verfahren (2) zur Frequenzverschachtelung nach einem der vorhergehenden Ansprüche, wobei der zu verschachtelnde Block von Symbolen eine Größe Npm kleiner als die Anzahl $N_{FFT}$ von orthogonalen Funktionen eines Multiplex- und Modulationsmoduls hat.

4. Verfahren (2) zur Frequenzverschachtelung nach einem der vorhergehenden Ansprüche, wobei die Mehrträger-Sendevorrichtung (3) $N_{FFT}$ Träger enthält, darunter Npm Datenträger, Npilotes Pilotträger und u Träger, denen ein Wert Null mit $N_{FFT} = Npm + Npilotes + u$ zugewiesen ist, wobei das Verschachtelungsgesetz an Npm aufeinanderfolgende Datensymbole vervollständigt durch no Symbole Null angewendet wird, mit $0 \leq no \leq u$, wobei u und no bestimmte Parameter sind.

5. Verfahren (2) zur Frequenzverschachtelung nach dem vorhergehenden Anspruch, wobei die den Datenträgern zugewiesenen Datensymbole Frequenzkomponenten eines von der Mehrträger-Sendevorrichtung (3) gesendeten Signals formen, und wobei die Anzahl no von Symbolen Null abhängig von Korrelationseigenschaften eines Übertragungssignals des gesendeten Signals bestimmt wird.

6. Verfahren (2) zur Frequenzverschachtelung nach einem der Ansprüche 1 und 2, wobei der zu verschachtelnde Block von Symbolen eine Größe M größer als die Anzahl $N_{FFT}$ von orthogonalen Funktionen des Multiplex- und Modulationsmoduls (Mx) hat, wobei M ein bestimmter Parameter ist.

7. Verfahren (2) zur Frequenzverschachtelung nach dem vorhergehenden Anspruch, wobei die Mehrträger-Sendevorrichtung (3) $N_{FFT}$ Träger enthält, darunter Npm Datenträger, wobei die zeitliche Änderung des Verschachtelungsgesetzes alle N modulierten orthogonalen Symbole auftritt, die vom Multiplex- und Modulationsmodul (Mx) generiert werden, wobei N ein bestimmter Parameter ist, und wobei die Größe M des zu verschachtelnden Blocks von Symbolen ein Vielfaches der Anzahl Npm von Datenträgern und ein Untervielfaches von N ist.

8. Frequenzverschachteler (9) von Symbolen, die dazu bestimmt sind, Trägern einer Mehrträger-Sendevorrichtung (3) zugewiesen zu werden, die ein Multiplex- und Modulationsmodul (Mx) durch $N_{FFT}$ orthogonale Funktionen enthält, um einen Block von K Symbolen gemäß einem bestimmten Verschachtelungsgesetz I(k) zu verschachteln, **dadurch gekennzeichnet, dass** er eine Rechenvorrichtung enthält, um das Verschachtelungsgesetz I(k) ausgehend von den Beziehungen zu berechnen:

$$I_{p,q}^0(k) = [-k - p.k]_K$$

$$I(k) = I_{p,q}^{(j)}(k) = \left[K - p + k + q \cdot p \cdot \left[-k - p \cdot I_{p,q}^{(j-1)}(k)\right]_K\right]_\nu$$

$$k = \{0, \dots, K - 1\}$$

und um das berechnete Blockverschachtelungsgesetz I(k) zeitlich zu ändern, indem indem die Anzahl von Iterationen j, einer der zwei Parameter p und q oder K für einen gegebenen Übertragungsmodus der Mehrträger-Sendevorrichtung (3) zeitlich geändert werden.

9.  Frequenzverschachteler (9) nach dem vorhergehenden Anspruch, wobei die Rechenvorrichtung eine Blockverschachtelungsvorrichtung (20) einer Größe K mit J Iterationen mit dem Index j, wobei J größer als oder gleich 1 ist, von digitalen Eingangsdaten enthält, die durch eine Variable $k = \{0, \dots, K - 1\}$ indiziert sind, die J Basiszellen I mit zwei Eingängen und einem Ausgang enthält, derart, dass jede Basiszelle I von zwei Elementarzellen $I_0$ und $I_1$ geformt wird, die je zwei Eingänge und einen Ausgang aufweisen, und die je zwei algebraische Funktionen Modulo K mit zwei Eingängen und einem Ausgang von Parametern p und q, $I_{0,p,q}(k, k1)$ und $I_{1,p,q}(k, k_1)$ anwenden, wobei der Ausgang der Basiszelle I dem Ausgang der Elementarzelle $I_1$ entspricht, die zwei Eingänge der Basiszelle I den zwei Eingängen der Elementarzelle $I_0$ entsprechen, der Ausgang der Elementarzelle $I_0$ einem ersten Eingang der Elementarzelle $I_1$ entspricht, der zweite Eingang der Elementarzelle $I_1$ mit einem ersten Eingang der Elementarzelle $I_0$ verbunden ist, der einem ersten Eingang der Basiszelle I entspricht,
    und dass die zwei Eingänge der ersten Basiszelle I miteinander verbunden sind und dem Index k entsprechen,
    und dass der Ausgang jeder Basiszelle I mit dem zweiten Eingang der Basiszelle I der folgenden Iteration verbunden ist,
    und dass die ersten Eingänge der Basiszellen I miteinander verbunden sind,
    und dass der Ausgang der Zelle J die Verschachtelungsfunktion I(k) bestimmt als die Kombination der zwei algebraischen Funktionen:

$$I(k) = I_{p,q}^{(j)}(k) = I_1\left(k, I_0^{(j)}(k)\right) \text{ mit } k = \{0, \dots, K - 1\}, \quad k_1 = k$$

wenn j gleich Eins ist.

10. Verwendung eines Frequenzverschachtelers (9) von Symbolen mit einem Positionsindex k, der die Verschachtelung eines Blocks von Symbolen gemäß einem bestimmten Verschachtelungsgesetz I(k) ausführt, **dadurch gekennzeichnet, dass** er eine Blockverschachtelungsvorrichtung (20) der Größe K, von Parametern p und q, die für eine gegebene Streuung bestimmt sind, bestehend aus J Iterationen mit dem Index j einer Turbo-Basisstruktur mit zwei Eingängen und einem Ausgang, die in Kaskade eine erste algebraische Funktion Modulo K mit zwei Eingängen $I_{o,p,q}(k, k1)$ und eine zweite algebraische Funktion Modulo K mit zwei Eingängen $I_{1,p,q}(k, k_1)$ anwendet, von denen ein Eingang gleich dem Positionsindex k der Symbole vor der Verschachtelung ist und ein zweiter Eingang vom Ausgang der vorhergehenden Iteration gespeist wird, wobei der Ausgang der Iteration J die Verschachtelungsfunktion I(k) als die Kombination der zwei algebraischen Funktionen bestimmt:

$$I(k) = I_{p,q}^{(j)}(k) = I_1\left(k, I_0^{(j)}(k)\right) \text{ mit } k = \{0, \dots, K - 1\}, \quad k_1 = k$$

wenn j gleich Eins ist, wobei J größer als oder gleich 1 ist,
um die zeitliche Frequenzverschachtelung von Symbolen abhängig von der zeitlichen Wahl der Werte von J, von p, von q oder von K zu ändern.

11. Sendevorrichtung, die einen Frequenzverschachteler (9) nach einem der Ansprüche 8 et 9 enthält.

**12.** Empfangsvorrichtung (4), die ein Entschachtelungsmodul enthält, das eine Entschachtelung von Symbolen ausführt, die gemäß einem Gesetz invers zu einem Verschachtelungsgesetz demoduliert wurden, **dadurch gekennzeichnet, dass** das Modul fähig ist, zu bestimmten Zeitpunkten das Entschachtelungsgesetz zu berechnen, wobei das Verschachtelungsgesetz I(k) sich für einen gegebenen Übertragungsmodus zeitlich ändert und mittels der Beziehungen erhalten wurde:

$$I_{p,q}^0(k) = [-k - p.k]_K$$

$$I(k) = I_{p,q}^{(j)}(k) = \left[K - p + k + q \cdot p \cdot \left[-k - p \cdot I_{p,q}^{(j-1)}(k)\right]_K\right]_K$$

$$k = \{0, \dots, K - 1\}$$

wobei gilt $j \geq 1$, K die Größe eines Blocks von Symbolen ist, und wobei die zeitliche Änderung des Verschachtelungsgesetzes aus der zeitlichen Änderung der Anzahl von Iterationen j, eines der zwei Parameter p und q oder von K für einen gegebenen Übertragungsmodus der Mehrträger-Sendevorrichtung resultiert.

**13.** Empfangsverfahren, das von einer Empfangsvorrichtung angewendet wird, die ein Entschachtelungsmodul enthält, das eine Entschachtelung von gemäß einem Gesetz invers zu einem Verschachtelungsgesetz demodulierten Symbolen ausführt, **dadurch gekennzeichnet, dass** das Modul zu bestimmten Zeitpunkten das Entschachtelungsgesetz berechnet, wobei das Verschachtelungsgesetz sich zeitlich für einen gegebenen Übertragungsmodus ändert und mittels der Beziehungen erhalten wurde:

$$I_{p,q}^0(k) = [-k - p.k]_K$$

$$I(k) = I_{p,q}^{(j)}(k) = \left[K - p + k + q \cdot p \cdot \left[-k - p \cdot I_{p,q}^{(j-1)}(k)\right]_K\right]_K$$

$$k = \{0, \dots, K - 1\}$$

wobei gilt $j \geq 1$, K die Größe eines Blocks von Symbolen ist, und wobei die zeitliche Änderung des Verschachtelungsgesetzes aus der zeitlichen Änderung der Anzahl von Iterationen j, eines der zwei Parameter p und q oder von K für einen gegebenen Übertragungsmodus der Mehrträger-Sendevorrichtung resultiert.

**Claims**

**1.** Method (2) for frequency interleaving of symbols intended to be assigned to carriers of a multicarrier transmission device (3) comprising an $N_{FFT}$ orthogonal function multiplexing and modulation module (Mx), consisting in interleaving (13) a block of K symbols according to a determined interleaving law I(k), **characterized in that** the interleaving law I(k) is obtained by means of the relationships:

$$I_{p,q}^O(k) = [-k - p \cdot k]_K$$

$$I(k) = I_{p,q}^{(j)}(k) = \left[K - p + k + q \cdot p \cdot \left[-k - p \cdot I_{p,q}^{(j-1)}(k)\right]_K\right]_K \quad k = \{0, \dots, K\text{-}1\}, \text{ and the block interleaving law}$$

is variable in time by varying in time the number of iterations j, one of the two parameters p and q or K for a given transmission mode of the multicarrier transmission device.

2. Frequency interleaving method (2) according to Claim 1, in which the time-variable interleaving law is obtained by selection of a law out of several interleaving laws generated by means of the iterative interleaving algorithm.

3. Frequency interleaving method (2) according to one of the preceding claims, in which the block of symbols to be interleaved is of size Npm less than the number $N_{FFT}$ of orthogonal functions of a multiplexing and modulation module.

4. Frequency interleaving method (2) according to one of the preceding claims, in which the multicarrier transmission device (3) comprises $N_{FFT}$ carriers including Npm data carriers, Npilots pilot carriers and u carriers to which are assigned a nul value with $N_{FFT} = Npm + Npilots + u$, the interleaving law being applied to Npm successive data symbols complemented by no zero symbols, with $0 \le no \le u$, u and no being determined parameters.

5. Frequency interleaving method (2) according to the preceding claim, in which the data symbols assigned to the data carriers form frequency components of a signal transmitted by the multicarrier transmission device (3), and in which the number no of zero symbols is determined as a function of correlation properties of a transmitted signal transmission channel.

6. Frequency interleaving method (2) according to one of Claims 1 and 2, in which the block of symbols to be interleaved is of size M greater than the number $N_{FFT}$ of orthogonal functions of the multiplexing and modulation module (Mx), M being a determined parameter.

7. Frequency interleaving method (2) according to the preceding claim, in which the multicarrier transmission device (3) comprises $N_{FFT}$ carriers including Npm data carriers, in which the temporal variation of the interleaving law occurs every N modulated orthogonal symbols generated by the multiplexing and modulation module (Mx), N being a determined parameter, and in which the size M of the block of symbols to be interleaved is a multiple of the number Npm of data carriers and a submultiple of N.

8. Frequency interleaver (9) of symbols intended to be assigned to carriers of a multicarrier transmission device (3) comprising an $N_{FFT}$ orthogonal function multiplexing and modulation module (Mx), for interleaving a block of K symbols according to a determined interleaving law I(k), **characterized in that** it comprises a computation device for computing the interleaving law I(k) from the relationships:

$$I^0_{p,q}(k) = \left[-k - p \cdot k\right]_K$$

$$I(k) = I^{(j)}_{p,q}(k) = \left[K - p + k + q \cdot p \cdot \left[-k - p \cdot I^{(j-1)}_{p,q}(k)\right]_K\right]_K \quad k = \{0,....,K-1\}$$

and for varying in time the computed block interleaving law I(k) by varying in time the number of iterations j, one of the two parameters p and q or K for a given transmission mode of the multicarrier transmission device (3).

9. Frequency interleaver (9) according to the preceding claim, in which the computation device comprises a size K block interleaving device (20) with J iterations of index j, J being greater than or equal to 1, of input digital data indexed by a variable $k = \{0,..., K\text{-}1\}$ comprising J base cells I with two inputs and one output, such that each base cell I is formed by two individual cells $I_0$ and $I_1$ which each comprise two inputs and one output and which respectively implement two modulo K algebraic functions with two inputs and one output, of parameters p and q, $I_{o,p,q}(k, k1)$ and $I_{1,p,q}(k, k_1)$, the output of the base cell corresponding to the output of the individual cell $I_1$, the two inputs of the base cell I corresponding to the two inputs of the individual cell $I_0$, the output of the individual cell $I_0$ corresponding to a first input of the individual cell $I_1$, the second input of the individual cell $I_1$ being linked to a first input of the individual cell $I_0$ which corresponds to a first input of the base cell I,
and in that the two inputs of the first base cell I are linked together and correspond to the index k,
and in that the output of each base cell I is linked to the second input of the base cell I of the next iteration,
and in that the first inputs of the base cells I are linked together,
and in that the output of the cell J determines the interleaving function I(k) as being the combination of the two algebraic functions: $I(k) = I_{p,q}^{(j)}(k) = I_1\left(k, I_0^{(j)}(k)\right)$ with $k = \{0,....,K-1\}$, $k_1 = k$ when j equals 1.

10. Use of a frequency interleaver (9) of symbols of position index k, performing the interleaving of a block of symbols according to a determined interleaving law I(k), **characterized in that** it comprises a size K block interleaving device (20), of parameters p and q determined for a given dispersion, consisting of J iterations of index j of a turbo-based structure with two inputs and one output implementing, in cascade fashion, a first modulo K algebraic function with two inputs $I_{o, p, q}(k, k1)$ and a second modulo K algebraic function with two inputs $I_{1,p, q}(k, k_1)$, of which one input is equal to the position index k of symbols before interleaving and a second input is fed by the output of the preceding iteration, the output of the iteration J determining the interleaving function I(k) as being the combination of the two algebraic functions:

$$I\left(k\right) = I_{p,q}^{\left(j\right)}\left(k\right) = I_I\left(k, I_0^{\left(j\right)}\left(k\right)\right) \quad \text{with} \quad k = \left\{0, \dots, K-1\right\}, \; k_1 = k \; \text{when j equals} \; 1, \; J$$

when j equals 1, J being greater than or equal to 1,
for varying the frequency interleaving in time of symbols as a function of the choice in time of the values of J, of p, of q or of K.

11. Transmission device comprising a frequency interleaver (9) according to one of Claims 8 and 9.

12. Reception device (4) comprising a de-interleaving module performing a de-interleaving of demodulated symbols according to an inverse law with one interleaving law **characterized in that** the module is able to compute, at determined instants, the de-interleaving law, the interleaving law I(k) varying with time for a given transmission mode and having been obtained by means of the relationships:

$$I_{p,q}^{0}(k) = \left[-k - p \cdot k\right]_K$$

$$I(k) = I_{p,q}^{(j)}(k) = \left[K - p + k + q \cdot p \cdot \left[-k - p \cdot I_{p,q}^{(j-1)}(k)\right]_K\right]_K \quad k = \left\{0, \dots, K-1\right\}$$

in which j ≥ 1, K is the size of a block of symbols and in which the variation in time of the interleaving law results from the variation in time of the number of iterations j, of one of the two parameters p and q or of K for a given transmission mode of the multicarrier transmission device.

13. Reception method implemented by a reception device comprising a de-interleaving module performing a de-interleaving of demodulated symbols according to an inverse law with an interleaving law **characterized in that** the module computes, at determined instants, the de-interleaving law, the interleaving law varying with time for a given transmission mode and having been obtained by means of the relationships:

$$I_{p,q}^{0}(k) = \left[-k - p \cdot k\right]_K$$

$$I(k) = I_{p,q}^{(j)}(k) = \left[K - p + k + q \cdot p \cdot \left[-k - p \cdot I_{p,q}^{(j-1)}(k)\right]_K\right]_K \quad k = \left\{0, \dots, K-1\right\}$$

in which j ≥ 1, K is the size of a block of symbols and in which the variation in time of the interleaving law results from the variation in time of the number of iterations j, of one of the two parameters p and q or of K for a given transmission mode of the multicarrier transmission device.

**Fig. 1**

**Fig. 2**

## Fig. 3

$N_{FFT} - (N'_{pm} + N_{pilote})$ sous-porteuses nulles

$N'_{pm}$ sous porteuses (no nulles, $N_{pm}$ données)

$N_{FFT}$

SD → | Insertion Symboles nuls | (12) → | Entrelacement In(k) | (13) → SE → | Mise en trame | (10) → (15) | Insertion symboles nuls | → ⊗ $W_{N_{FFT}}^{Om}$ → ⊗ $W_{N_{FFT}}^{km}$ → ⊗ $W_{N_{FFT}}^{(N_{FFT}-1)m}$ → Σk → Mx → ⊗ $S_n(m)$ ↑ $(-1)^m$ → | Insertion Tcp | → | Support de transmission | (11) → ⊕ ← | Bruit additif |

## Fig. 4

(20)

k → I$^{(1)}$ | I | → I → $I_{p,q}(k)$ → I → $I_{p,q}^{(2)}(k)$ → I → $I_{p,q}^{(3)}(k)$ → → $I_{p,q}^{(j)}(k)$

I$^{(j)}$

$I(k) = f(p,q,K,k)$

$I_{p,q}^{(j-1)}(k)$ → k → I$_0$ → I$_1$ → $I_{p,q}^{(j)}(k)$

$I_{p,q}^{(j)}(k) = I_1(k, Io^{(j)}(k))$

$N'_{pm}$

Choix de no,
$N'_{pm}=N_{pm}+no$

30

31

Détermination de NN'
Détermination de $p_n,q_n,j_n$

32

Détermination de N

$N_{FFT}$

f

f

f

**Fig. 5**

EP 1 969 792 B1

Fig. 6

$N_{FFT}$

Lois dynamiques
taille : K
multiple Npm

40

Codage canal

Entrelacement symbole

Codage binaire à symbole et modulation

Entrelacement symbole (d)

Mise en trame

Insertion symboles nuls (n1)

$W_{N_{FFT}}^{Om}$

$W_{N_{FFT}}^{km}$

$W_{N_{FFT}}^{(N_{FFT}-1)m}$

$\sum_{k}$

TFDI

$S_n(m)$

$(-1)^m$

Insertion Tcp

Support de transmission

Bruit additif

Source binaire $b_u(k)$

$y_n(t)$

Elimination Tcp

$(-1)^m$

S/P

TFD

$W_{N_{FFT}}^{-Om}$

$W_{N_{FFT}}^{-km}$

$W_{N_{FFT}}^{-(N_{FFT}-1)m}$

$\sum_{m}$

Elimination symboles nuls (n1)

Extraction symb. données

$\hat{H}_{nk}$

Désentrelacement symbole (d)

Démodulation et décodage binaire à symbole

Désentrelacement binaire

Données codées bk

Décodage

$\tilde{b}_u(k)$

EP 1 969 792 B1

23

# Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6704366 B1

- FR 00414113

**Littérature non-brevet citée dans la description**

- Radio broadcasting systems; Digital Audio Broadcasting (DAB) to mobile, portable and fixed receivers. *ETSI 300 401,* Mai 1997, 182

- Physical Layer Submission to 802.15 Task Group 3a : Multi-Band Orthogonal Frequency Division Multiplexing. *MBOA website,* 14 Septembre 2004
- IEEE Standard for Local and metropolitan area networks. *IEEE Std 802.16-2004,* Octobre 2004